# DEMANDE DE BREVET EUROPEEN

(11) **EP 0 875 829 A1**
(43) Date de publication de la demande: **04.11.1998**
(21) Numéro de dépôt: 98401064.5
(22) Date de dépôt: 30.04.1998
(51) Int. Cl.: G06F 9/46

(54) **Procédé d'affectation dynamique de tâches à des événements arrivant sur un ensemble de files d'attente**

(30) Priorité: 02.05.1997 FR 9705454
(71) Demandeur: ALCATEL ALSTHOM COMPAGNIE GENERALE D'ELECTRICITE, 75008 Paris (FR)
(72) Inventeur: Mansion, Jean-Louis, 78160 Marly le Roi (FR)
(74) Mandataire: Sciaux, Edmond

(57) **Abrégé**

Procédé de gestion d'un système comportant une pluralité de files d'attente dans lesquelles sont insérés des événements par un ensemble d'émetteurs, et un ensemble de tâches consommant lesdits événements, caractérisé en ce qu'à chaque file d'attente est associé un identifiant d'indirection et en ce que chaque fois qu'un émetteur désire insérer un nouvel événement dans une file d'attente, il consulte l'état dudit identifiant d'indirection et, le cas échéant, insère un événement, dit événement de substitution, contenant un identificateur de ladite file d'attente, dans la file d'attente indiquée par ledit identifiant d'indirection.

## Description

La présente invention concerne un procédé d'affectation dynamique de tâches à des événements arrivant sur un ensemble de files d'attentes, au sein d'un système de traitement de l'information. On appelle événement, un message pouvant survenir de façon asynchrone et pouvant contenir un certain nombre de paramètres.

L'invention trouve une application dans le domaine de la gestion de réseaux de télécommunication par un système de traitement de l'information. Chaque file d'attente correspond alors à une communication gérée par le système. Au sein d'une même communication peuvent survenir différents événements comme une numérotation, un envoi d'un paquet de données etc. Ces événements sont stockés, au fur et à mesure de leur arrivée, dans la file d'attente correspondant à la communication qui leur correspond.

On comprend bien que, dans une telle configuration, le nombre des files d'attente peut devenir très important.

Bien que s'appliquant particulièrement bien au domaine de la gestion de réseaux de télécommunication, la présente invention est de portée tout à fait générale et, donc, susceptible de s'appliquer à de nombreux domaines techniques où le problème de la gestion d'un ensemble important de files d'attente se pose.

Ces événements, nécessitant un traitement, vont être consommé par le système de traitement de l'information ; c'est-à-dire que chaque événement inséré dans une file d'attente est traité par le système et retiré de la file d'attente.

De façon classique en soi, le système de traitement de l'information destiné à consommer les événements insérés dans les files d'attente est de type multitâche.

Une tâche peut être définie comme une unité élémentaire d'exécution. On distingue habituellement la notion de tâche de la notion de processus (*process* en anglais). Un processus comprend une ou plusieurs tâches ainsi qu'un contexte d'exécution et une pile, c'est-à-dire un ensemble de données utiles pour l'exécution des tâches contenues dans le processus.

Dans des systèmes d'exploitation classiques comme Unix, un processus contient une unique tâche. Il existe toutefois des systèmes plus récents comme par exemple le système micronoyau Chorus de la société Chorus System, dans lesquels un processus peut contenir plusieurs tâches que l'on appelle généralement *threads.*

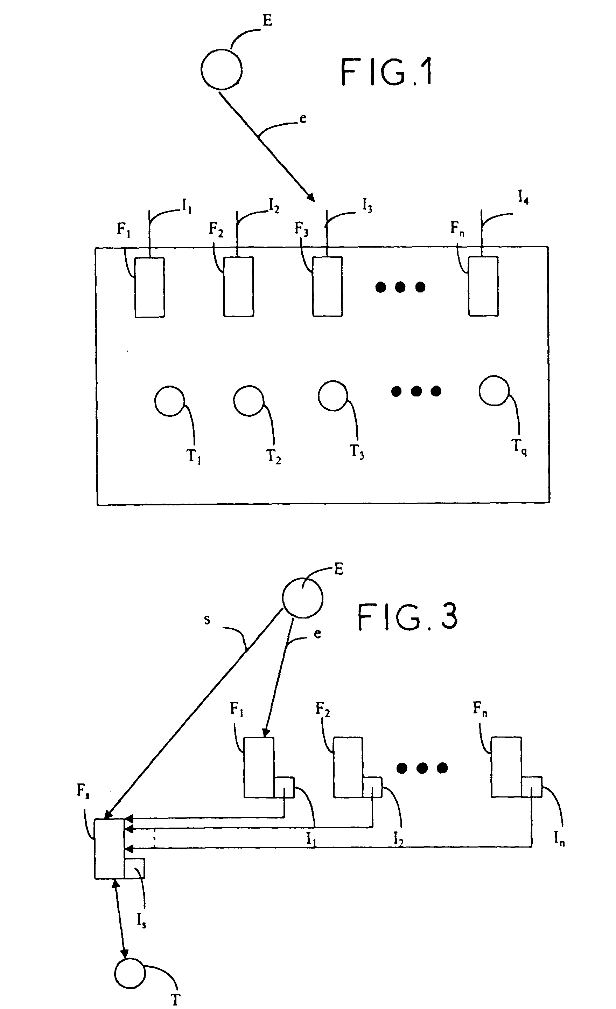

La figure 1 illustre le contexte dans lequel s'inscrit la présente invention, de façon plus technique. Des émetteurs, tels des processus, extérieurs au système selon l'invention insèrent des événements dans une pluralité de files d'attente (F₁, F₂, F₃,... Fₙ). Ces événements nécessitent des traitements qui sont pris en charge par un ensemble de tâches (T₁, T₂, T₃,...T_{q}). On comprend que dans une telle configuration le nombre des tâches doit être en adéquation avec la fréquence d'arrivée des événements à traiter et avec le nombre n des files d'attente.

Une première approche pour faire en sorte que les événements arrivant dans les files d'attentes soient traités de façon adéquate par les tâches, consiste à affecter une tâche par file d'attente (et donc à égaler les valeurs de n et de q).

Cependant, cette solution ne peut être raisonnablement retenue dans certains cas et notamment lorsque le nombre de files d'attente devient important. Ceci pour plusieurs raisons tenant à l'implémentation informatique d'une tâche dans un système de traitement de l'information :
- Chaque tâche occupe un certain volume mémoire, notamment du fait du stockage de son contexte d'exécution et, surtout, de sa pile. A mesure que le nombre de tâches augmente, le volume total peut devenir prohibitif.
- Par ailleurs, de façon classique, le système d'exploitation sous-jacent maintient à jour une table référençant l'ensemble des ressources du système et, en particulier, les tâches. Aussi, plus le nombre de tâches est élevé, plus la table des ressources que le système a à gérer est volumineuse, de sorte que toute action nécessitant un accès à cette table (élection d'une tâche, commutation de deux tâches sur un même processeur...) devient coûteuse en temps.

Le but de la présente invention est de proposer un procédé ne présentant pas ces inconvénients. Plus précisément, le procédé selon l'invention permet de gérer n files d'attente et q tâches avec q<n.

Pour cela, le procédé selon l'invention se caractérise en ce qu'à chaque file d'attente est associé un identifiant d'indirection et en ce que chaque fois qu'un émetteur désire insérer un nouvel événement dans une file d'attente, il consulte l'état de l'identifiant d'indirection et, le cas échéant, insère un événement, dit événement de substitution, contenant un identificateur de la file d'attente, dans la file d'attente indiquée par l'identifiant d'indirection.

Les caractéristiques et avantages de la présente invention apparaîtront de façon plus claire dans la description qui va suivre en relation avec les figures annexées.

La figure 1, déjà commentée, illustre le contexte général dans lequel s'inscrit la présente invention.

Les figures 2a et 2b représentent le procédé selon l'invention illustré par un exemple.

La figure 3 représente un exemple particulier de réalisation du procédé selon l'invention.

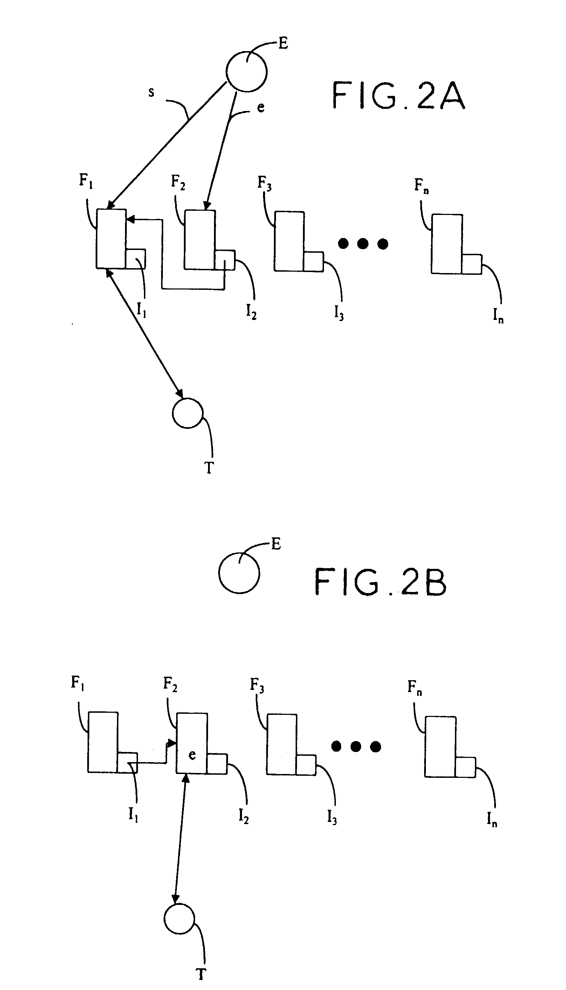

La figure 2a représente une pluralité de files d'attente F₁, F₂, F₃,...Fₙ, chaque file d'attente étant associée à un identifiant d'indirection, respectivement I₁, I₂, I₃,...Iₙ.

Lorsqu'un émetteur E insère un événement e dans une file d'attente (F₂ par exemple), il consulte l'état de l'identifiant d'indirection qui lui est associé (I₂ selon l'exemple). Si cet identifiant d'indirection contient un identificateur d'une autre file d'attente (F₁ selon l'exemple illustré sur la figure 1), l'émetteur doit insérer un événement s, dit événement de substitution, dans cette autre file d'attente.

L'événement de substitution s contient un identificateur de la file d'attente d'origine, c'est-à-dire celle dans laquelle a été inséré l'événement e (F₂ selon l'exemple).

Selon une mise en oeuvre particulière, l'événement de substitution s contient aussi une priorité.

Une tâche traitant les événements contenus dans une file d'attente se trouve donc confrontée à deux types d'événements :
- des événements de substitution, et,
- des événements dit normaux.

L'ordre dans lequel les tâches traitent les événements insérés dans les files d'attente peut faire l'objet de plusieurs mises en oeuvre particulière de la présente invention.

Ainsi, les files d'attente peuvent être du type FIFO *(First In, First Out).* Dans ce cas de figure, les tâches traitent les événements dans l'ordre de leur arrivée.

On peut aussi évoquer la possibilité dans laquelle les tâches gèrent indépendamment les événements normaux et les événements de substitution. Par exemple, une tâche connectée à une file d'attente traite d'abord tous les événements normaux insérés dans cette file d'attente, puis elle change de file d'attente en traitant un événement de substitution.

Selon la mise en oeuvre précédemment évoquée dans laquelle les événements de substitution contiennent une priorité fixée par l'émetteur, les tâches traitent les événements dans l'ordre imposé par ces priorités.

Lorsqu'une tâche a à traiter un événement de substitution, elle doit aller lire l'événement correspondant dans la file d'attente dont la référence est indiquée en paramètre de l'événement de substitution. Elle positionne aussi l'identifiant d'indirection associé à sa file d'attente d'origine de sorte que tout événement qui y est inséré par un émetteur provoque un événement de substitution sur la file d'attente de destination.

Sur l'exemple illustré par la figure 2b, la tâche T reçoit un événement de substitution s et choisit de le traiter. Pour cela, elle se connecte sur la file d'attente F₂ dont l'identifiant est contenu dans les paramètres de l'événement de substitution s, et mets à jour les identifiants d'indirection I₁ et I₂ de sorte que I₁ indique F₂ et que I₂ indique que la file F₂ ne nécessite plus d'envois d'événements de substitution.

Elle peut alors lire le contenu de l'événement e contenu dans F₂ et le traiter.

A chaque arrivée d'un nouvel événement sur la file d'attente F₁, un événement de substitution sera envoyé sur F₂ et la tâche T en sera ainsi avertie.

La figure 3 illustre une mise en oeuvre particulière dans laquelle une des files d'attente est dédiée aux événements de substitution.

Toutes les tâches disponibles, c'est-à-dire n'étant pas en train de traiter un événement particulier sur une file d'attente quelconque, sont connectées à la file d'attente Fₛ dédiée aux événements de substitution. De la même façon, tous les identifiants d'indirection associés à des files d'attente non traitées par une tâche quelconque contiennent l'identificateur de la file d'attente Fₛ dédiée aux événements de substitution.

Lorsqu'une tâche a terminé de traiter le ou les événements insérés sur une file d'attente particulière, elle se connecte à nouveau sur la file d'attente dédiée aux événements de substitution Fₛ.

Il existe bien évidemment de nombreuses autres possibilités de mises en oeuvre de l'invention. Par exemple, on pourrait affecter une tâche à un groupe de files d'attente. En tout état de cause, la présente invention ne saurait se limiter à l'une de ces possibilités mais au mécanisme général tel que présenté dans les revendications.

## Revendications

1. Procédé de gestion d'un système comportant une pluralité de files d'attente dans lesquelles sont insérés des événements par un ensemble d'émetteurs, et un ensemble de tâches consommant lesdits événements, caractérisé en ce qu'à chaque file d'attente est associé un identifiant d'indirection et en ce que chaque fois qu'un émetteur désire insérer un nouvel événement dans une file d'attente, il consulte l'état dudit identifiant d'indirection et, le cas échéant, insère un événement, dit événement de substitution, contenant un identificateur de ladite file d'attente, dans la file d'attente indiquée par ledit identifiant d'indirection.

2. Procédé selon la revendication 1, caractérisé en ce que lesdites files d'attente sont de type FIFO *(First In, First Out).*

3. Procédé selon la revendication 1, caractérisé en ce que lesdits événements de substitution contiennent une priorité, et en ce que lesdites tâches traitent les événements insérés dans lesdites files d'attente, dans l'ordre imposé par lesdites priorités.
